(19) Europäisches Patentamt / European Patent Office / Office européen des brevets

(11) **EP 4 342 923 A1**

(12) **EUROPEAN PATENT APPLICATION**
published in accordance with Art. 153(4) EPC

(43) Date of publication:
**27.03.2024 Bulletin 2024/13**

(21) Application number: **22802882.5**

(22) Date of filing: **28.03.2022**

(51) International Patent Classification (IPC):
**C08G 18/00** (2006.01)    **A47C 27/15** (2006.01)
**C08G 101/00** (2006.01)

(52) Cooperative Patent Classification (CPC):
**A47C 27/15; C08G 18/00;** C08G 2101/00

(86) International application number:
**PCT/JP2022/015061**

(87) International publication number:
**WO 2022/244480 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.05.2021   JP 2021085926**

(71) Applicants:
• **Inoac Corporation
Nagoya-shi, Aichi 450-0003 (JP)**
• **Rogers Inoac Corporation
Nagoya-shi, Aichi 450-0003 (JP)**

(72) Inventors:
• **KIRIYAMA Takuya
Chita-gun, Aichi 470-2309 (JP)**
• **UCHIDA Kento
Chita-gun, Aichi 470-2309 (JP)**

(74) Representative: **TBK
Bavariaring 4-6
80336 München (DE)**

(54) **POLYURETHANE FOAM AND CUSHIONING MATERIAL**

(57)    Provided is a polyurethane foam in which cushioning properties are not easily impaired at a low temperature. The polyurethane foam is a polyurethane foam obtained from a composition containing a polyol and a polyisocyanate, and when a 25% compression load measured under a condition of 25°C is P1 (MPa) and a 25% compression load measured under a condition of -30°C is P2 (MPa), (P2/P1) $\times$ 100 $\leq$ 180 is satisfied.

EP 4 342 923 A1

**Description**

TECHNICAL FIELD

The present disclosure relates to a polyurethane foam and a cushioning material.
This application is based on and claims the benefit of priority of Japanese Patent Application No. 2021-085926 filed on May 21, 2021, the entire contents of which are incorporated herein by reference.

BACKGROUND ART

Patent Literature 1 discloses a cushioning material for a battery. The cushioning material for a battery has a foam obtained by foaming a foamable resin sheet containing an elastomer component and a foaming agent.
Patent Literature 2 also discloses a cushioning material for a battery.

CITATIONS LIST

PATENT LITERATURE

Patent Literature 1: Japanese Unexamined Patent Application Publication No. 2020-050841
Patent Literature 2: Japanese Unexamined Patent Application Publication No. 2020-139062

SUMMARY OF INVENTION

TECHNICAL PROBLEMS

In recent years, polyurethane foams have been required to have various performances, and their requirements have also become severe. For example, a polyurethane foam used as a cushioning material is assumed to be used in a wide temperature range depending on its use. There is a demand for a polyurethane foam in which cushioning properties are not easily impaired in a wide temperature range, particularly at a low temperature.
An object of the present disclosure is to provide a polyurethane foam in which cushioning properties are not easily impaired at a low temperature.
The present disclosure can be implemented in the following forms.

SOLUTIONS TO PROBLEMS

[1] A polyurethane foam obtained from a composition containing a polyol and a polyisocyanate,

when a 25% compression load measured under a condition of 25°C is P1 (MPa) and a 25% compression load measured under a condition of -30°C is P2 (MPa),

$$(P2/P1) \times 100 \leq 180$$

being satisfied.

ADVANTAGEOUS EFFECTS OF INVENTION

According to the present disclosure, it is possible to provide a polyurethane foam in which cushioning properties are not easily impaired at a low temperature.

BRIEF DESCRIPTION OF DRAWINGS

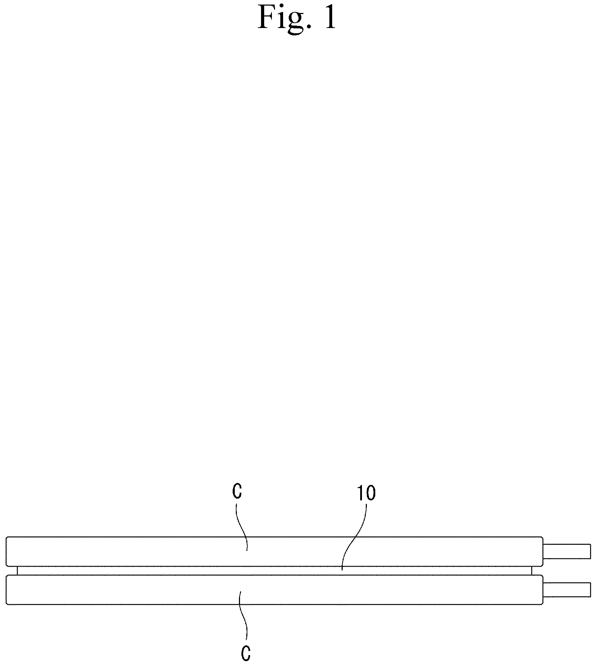

Fig. 1 is a view schematically illustrating a cushioning material according to an embodiment.

DESCRIPTION OF EMBODIMENT

Desirable examples of the present disclosure will now be described.

[2] A polyurethane foam having a glass transition point of -30°C or lower.
[3] A polyurethane foam having a hysteresis loss rate of 15% or less.
[4] A polyurethane foam satisfying 1000 ≤ A for A obtained by the following formula (a):
[Math. 1]

$$A = \sum_{i=1}^{n} \left( \frac{m1i}{f1i} \times \frac{x1i}{y1} \right) \qquad \cdots (a)$$

m1i: weight average molecular weight of an i-th type of polyol (i is a natural number of $1 \leq i \leq n$) among n types of polyols (n is a natural number of 1 or more) contained in the polyol
f1i: the number of hydroxyl groups per molecule of the i-th type of polyol (i is a natural number of $1 \leq i \leq n$) among n types of polyols (n is a natural number of 1 or more) contained in the polyol
x1i: blending amount (parts by mass) of the i-th type of polyol (i is a natural number of $1 \leq i \leq n$) among n types of polyols (n is a natural number of 1 or more) contained in the polyol
y1: blending amount (parts by mass) of all n types of polyols (n is a natural number of 1 or more) contained in the polyol

[5] A cushioning material including the polyurethane foam.

Hereinafter, the present disclosure will be described in detail. In the present specification, unless otherwise specified, the numerical value range expressed by "(value) to (value)" includes the lower limit and the upper limit of the range. For example, the expression "10 to 20" includes both a lower limit of "10" and an upper limit of "20". That is, "10 to 20" is equivalent to "10 or more and 20 or less".

1. Polyurethane foam

The polyurethane foam is obtained from a composition containing a polyol and a polyisocyanate. In the polyurethane foam, when a 25% compression load measured under a condition of 25°C is P1 (MPa) and a 25% compression load measured under a condition of -30°C is P2 (MPa),

$$(P2/P1) \times 100 \leq 180$$

is satisfied.

[Polyol]

The polyol is not particularly limited as long as it satisfies the above conditions. As the polyol, a polyether polyol, a polymer polyol, and a polyester polyol are preferably used in combination.
The polyether polyol is preferably a polyether polyol having a weight average molecular weight of 1500 to 4500 (preferably 2000 to 4000) and three or two functional groups.
The content of the polyether polyol is not particularly limited. The content of the polyether polyol is preferably 30 parts by mass or more and 90 parts by mass or less, and more preferably 40 parts by mass or more and 85 parts by mass or less when the total amount of the polyols is 100 parts by mass.
The polymer polyol is more preferably a polymer polyol having a weight average molecular weight of 1500 to 4500 (preferably 2000 to 4000) and two or three functional groups. As the polymer polyol, for example, a polymer polyol obtained by graft copolymerization of a vinyl monomer such as acrylonitrile and styrene in a polyether polyol having two or three functional groups as a base polyol can be suitably used. The weight average molecular weight of the polymer polyol means the weight average molecular weight of the base polyol.
The polymer content of the polymer polyol (mass ratio of a portion other than the base polyol to the entire polymer polyol) is preferably 10 to 40% by mass, and more preferably 15 to 30% by mass. From the viewpoint of improving strength of the polyurethane foam, the larger polymer content is more preferable; however, when the polymer content is too large, a viscosity may be increased and workability may be deteriorated. As the polymer polyol, only one polymer polyol may be contained, or two or more polymer polyols different in the weight average molecular weight, the polymer content, the number of functional groups, and the like may be used in combination. By using the polymer polyol, hardness of the polyurethane foam can be improved.

The content of the polymer polyol is not particularly limited. The content of the polymer polyol is preferably 5 parts by mass or more and 60 parts by mass or less, and more preferably 25 parts by mass or more and 45 parts by mass or less when the total amount of the polyols is 100 parts by mass.

The polyester polyol is more preferably a polyester polyol having two functional groups. The weight average molecular weight of the polyester polyol is preferably in a range of 200 to 2500, preferably in a range of 250 to 1500, and more preferably in a range of 300 to 800. As the polyester polyol, for example, a polycaprolactone-based polyester polyol, an adipate-based polyester polyol, or the like can be used. Examples of the polycaprolactone-based polyester polyol include polyester polyols obtained by ring-opening addition polymerization of lactones such as ε-caprolactone. Examples of the adipate-based polyester polyol include a polyester polyol obtained by polycondensation of a polyfunctional carboxylic acid and a polyfunctional hydroxy compound. By using the polyester polyol, the strength of the polyurethane foam can be improved. The polyester polyol also has an action of making cells of the polyurethane foam finer and more uniform.

The content of the polyester polyol is not particularly limited. The content of the polyester polyol is preferably 1 part by mass or more and 20 parts by mass or less, and more preferably 5 parts by mass or more and 15 parts by mass or less when the total amount of the polyols is 100 parts by mass.

As the polyol, a polyol other than the above-mentioned polyol may be contained. Another polyol is not particularly limited as long as it is a polyol generally used for the polyurethane foam.

In the present disclosure, when a low molecular weight polyhydric alcohol such as ethylene glycol, diethylene glycol, triethylene glycol, propylene glycol, dipropylene glycol, 1,3-butanediol, 1,4-butanediol, glycerin, trimethylolpropane, pentaerythritol, or sorbitol is used, these polyhydric alcohols are also included in the polyol.

[Polyisocyanate]

The polyisocyanate is a compound having a plurality of isocyanate groups, and for example: an aromatic isocyanate such as 4,4-diphenylmethane diisocyanate (MDI), tolylene diisocyanate (TDI), 1,5-naphthalene diisocyanate (NDI), triphenylmethane triisocyanate, and xylylene diisocyanate (XDI); an alicyclic isocyanate such as isophorone diisocyanate (IPDI) and dicyclohexylmethane diisocyanate; an aliphatic isocyanate such as hexamethylene diisocyanate (HDI); or a modified isocyanate such as free isocyanate prepolymers and carbodiimide-modified isocyanates obtained by reaction of these polyisocyanates with a polyol can be used. These polyisocyanates may be contained alone, or may be contained in combination of two or more thereof.

The polyisocyanate may be any of an aromatic isocyanate, an alicyclic isocyanate, and an aliphatic isocyanate, and may be a bifunctional isocyanate having two isocyanate groups in one molecule, or tri- or higher isocyanates having three or more isocyanate groups in one molecule, and these isocyanates may be used alone or in combination of two or more of them.

Examples of the bifunctional isocyanate include: an aromatic isocyanate such as 2,4-tolylene diisocyanate (TDI), 2,6-tolylene diisocyanate (TDI), m-phenylene diisocyanate, p-phenylene diisocyanate, 4,4'-diphenylmethane diisocyanate (MDI), 2,4'-diphenylmethane diisocyanate (MDI), 2,2'-diphenylmethane diisocyanate (MDI), xylylene diisocyanate, 3,3'-dimethy-4,4'-biphenylene diisocyanate, and 3,3'-dimethoxy-4,4'-biphenylene diisocyanate; an alicyclic isocyanate such as cyclohexane-1,4-diisocyanate, isophorone diisocyanate, dicyclohexylmethane-4,4'-diisocyanate, and methylcyclohexane diisocyanate; and an aliphatic isocyanate such as butane-1,4-diisocyanate, hexamethylene diisocyanate, isopropylene diisocyanate, methylene diisocyanate, and lysine isocyanate. Examples of the di- or higher functional isocyanate include polymethylene polyphenyl isocyanate (polymeric MDI). Examples of the tri- or higher functional isocyanate include 1-methylbenzol-2,4,6-triisocyanate, 1,3,5-trimethylbenzol-2,4,6-triisocyanate, biphenyl-2,4,4'-triisocyanate, diphenylmethane-2,4,4'-triisocyanate, methyldiphenylmethane-4,6,4'-triisocyanate, 4,4'-dimethyldiphenylmethane-2,2',5,5' tetraisocyanate, and triphenylmethane-4,4',4"-triisocyanate. Each of the isocyanates is not limited to one type, and may be one or more types. For example, one aliphatic isocyanate and two aromatic isocyanates may be used in combination.

The number of functional groups of the polyisocyanate is preferably in a range of 2.0 to 2.8 from the viewpoint of hardness and repulsion.

An isocyanate index (INDEX) of the polyisocyanate is preferably in a range of 90 to 110. The isocyanate index is an equivalence ratio of isocyanate groups of a polyisocyanate with respect to reactive groups such as hydroxyl groups capable of reacting with an isocyanate in a polyol. Therefore, when the value is less than 100, it means that the reactive group such as a hydroxyl group is more excessive than the isocyanate group, and when the value is more than 100, it means that the isocyanate group is more excessive than the reactive group such as a hydroxyl group. When the isocyanate index is less than 90, the polyol may not sufficiently react with the polyisocyanate. On the other hand, when the isocyanate index is more than 110, there is a possibility that low repulsion is caused.

[Foam stabilizer]

A foam stabilizer is used for smoothly foaming a composition, and the composition preferably contains the foam stabilizer. As the foam stabilizer, a known foam stabilizer usually used when a mechanical froth method is employed, for example, a silicone-based foam stabilizer, can be used. Since such a foam stabilizer has a high viscosity, the foam stabilizer is usually blended in the composition in a diluted state with a solvent such as alkylbenzene.

The content of the foam stabilizer in the composition is preferably 3 parts by mass to 6 parts by mass with respect to 100 parts by mass of the polyols. When the content is 3 parts by mass or more, this can contribute to improvement of cell uniformity and reduction of the density of the polyurethane foam. Even when the foam stabilizer is contained in an amount of more than 6 parts by mass, remarkable improvement of a foam stabilizing force cannot be expected. When the foam stabilizer is diluted with a solvent, the mass ratio (foam stabilizer: solvent) is preferably in a range of 25: 75 to 75: 25.

[Catalyst]

A catalyst is used mainly for promoting an urethanization reaction between a polyol and a polyisocyanate, and the composition preferably contains the catalyst. As the catalyst, a known catalyst usually used for a polyurethane foam can be used, for example, a tertiary amine such as triethylenediamine, dimethylethanolamine, or N,N',N'-trimethylaminoethylpiperazine; an organometallic compound such as stannous octoate or tin octylate (tin octoate); an acetate; or an alkali metal alcoholate.

The content of the catalyst in the composition is preferably 0.1 parts by mass to 5.0 parts by mass with respect to 100 parts by mass of the polyols. When the content is 0.1 parts by mass or more, the urethanization reaction can be sufficiently promoted. When the content is 5.0 parts by mass or less, it is possible to prevent formation of a cell structure from being non-uniform due to excessive promotion of the urethanization reaction.

[Other components]

The composition may contain other components other than the above components as necessary. Examples of other components include an antioxidant, an ultraviolet absorber, a thickener, a plasticizer, an antibacterial agent, and a colorant. Examples of the antioxidant include dibutylhydroxytoluene and a hindered phenol-based antioxidant, and from the viewpoint of reducing a content of a volatile organic compound, it is particularly preferable to use a hindered phenol-based antioxidant having a molecular weight of 300 or more. Examples of the thickener include calcium carbonate, aluminum hydroxide, and magnesium hydroxide.

2. Requirements regarding weight average molecular weight per hydroxyl group in polyol

A polyurethane foam preferably satisfies $1000 \leq A$ for A obtained by the above formula (a). The polyurethane foam more preferably satisfies $1100 \leq A$, and still more preferably satisfies $1150 \leq A$. The upper limit value of A is not particularly limited. The polyurethane foam may satisfy, for example, $A \leq 2300$ for A obtained by the above formula (a).

A obtained by the formula (a) represents a weight average molecular weight per hydroxyl group in a polyol. When one polyol is included in the polyol, A can be obtained by dividing the weight average molecular weight of the polyol by the number of hydroxyl groups per molecule of the polyol. When a plurality of types of polyols are included in the polyol, A can be obtained by multiplying a value, obtained by dividing the weight average molecular weight of each polyol by the number of hydroxyl groups per molecule of each polyol, by a content rate (% by mass) of each polyol and summing these values.

For example, in Example 2 (n = 12) described later, A is obtained as 1194 from the following formula (a-1):
[Math. 2]

$$A = \frac{3000}{3} \times \frac{5.2}{100} + \frac{3000}{2} \times \frac{36.5}{100} + \frac{3000}{2} \times \frac{19.9}{100} + \frac{3000}{3} \times \frac{26.5}{100}$$
$$+ \frac{3000}{3} \times \frac{0}{100} + \frac{3000}{3} \times \frac{0}{100} + \frac{3400}{3} \times \frac{0}{100} + \frac{2000}{2} \times \frac{0}{100}$$
$$+ \frac{400}{2} \times \frac{0}{100} + \frac{529}{2} \times \frac{11.9}{100} + \frac{134}{2} \times \frac{0}{100} + \frac{90}{2} \times \frac{0}{100} \cdots (a-1)$$

The polyurethane foam more preferably satisfies $2400 \leq A \times B$ for A obtained by the above formula (a) and B obtained by the following formula (b).
[Math. 3]

$$B = \sum_{i=1}^{m} \left( f2i \times \frac{x2i}{y2} \right) \qquad \cdots (b)$$

f2i: the number of isocyanate groups per molecule of an i-th type of polyisocyanate (i is a natural number of $1 \leq i \leq m$) among m types of polyisocyanates (m is a natural number of 1 or more) contained in the polyisocyanate
x2i: the blending amount (parts by mass) of the i-th type of polyisocyanate (i is a natural number of $1 \leq i \leq m$) among m types of polyisocyanates (m is a natural number of 1 or more) contained in the polyisocyanate
y2: blending amount (parts by mass) of all m types of polyisocyanates (m is a natural number of 1 or more) contained in the polyisocyanate

B obtained by the formula (b) represents an average number of functional groups of the polyisocyanate. When one polyisocyanate is contained in the polyisocyanate, B can be obtained as the number of functional groups thereof. When a plurality of types of polyisocyanates are contained in the polyisocyanate, B can be obtained by multiplying the number of functional groups of each polyisocyanate by the content (% by mass) of each polyisocyanate and summing these values.
For example, in Example 2 (m = 2) described later, B is obtained as 2.4 from the following formula (b-1):
[Math. 4]

$$B = 2.4 \times \frac{16.2}{16.2} + 2 \times \frac{0}{16.2} \qquad \cdots (b-1)$$

A and B are multiplied to obtain the weight average molecular weight of the polyol per isocyanate molecule. The fact that $A \times B$ is a predetermined value or more is an indicator that the weight average molecular weight of the polyol per isocyanate molecule is a predetermined value or more. When the weight average molecular weight of the polyol per isocyanate molecule is the predetermined value or more, cushioning properties at a low temperature can be suitably maintained. For example, in Example 2 described later, the value of $A \times B$ is obtained as 2866 from an expression of $1194 \times 2.4$.
The value of $A \times B$ may be 2500 or more, 2600 or more, or 2700 or more. The value of $A \times B$ is usually 5000 or less, and may be 4500 or less, 4000 or less, or 3500 or less.

3. Physical properties of polyurethane foam

In the polyurethane foam, when a 25% compression load measured under a condition of 25°C is P1 (MPa) and a 25% compression load measured under a condition of -30°C is P2 (MPa),

$$(P2/P1) \times 100 \leq 180$$

is satisfied.

The compression load under each temperature condition can be measured as follows based on JIS K 6254: 2010.

[Measurement method]

A test piece has a cylindrical shape with a diameter of 50 mm. The number of test pieces is three. For the measurement, a compression testing machine is used in which a mounted CLD (Compression-Load-Deflection) measuring jig comes into contact with a test piece, and at the same time, a load cell senses a repulsive force from the test piece compressed, and the repulsive force is continuously recorded.

The test piece is compressed at a rate of 1.0 mm/min until it reaches a deflection of 30%, and a relationship between a compressive force and deflection (compressive force-deformation curve) is recorded. From the recorded compressive force-deformation curve, the compressive force (25% compressive force) when the deflection is 25% with respect to the thickness of the test piece before compression is obtained. The 25% compression load is calculated by the following formula:

25% compression load [MPa] = 25% compressive force [N]/area of test piece [mm$^2$]

The value of P2/P1 is an indicator representing a rate of increase in hardness of the polyurethane foam when the temperature is changed from room temperature to -30°C. The fact that the value of P2/P1 is 100 means that the 25% compression load is the same at 25°C (room temperature) and -30°C, that is, the hardness does not increase at low temperatures.

The value of P2/P1 may be 160 or less, 140 or less, 120 or less, or 110 or less. The value of P2/P1 is usually 95 or more, and may be 98 or more or 100 or more.

The 25% compression load P1 measured under the condition of 25°C is preferably 0.005 MPa or more and 1 MPa or less, more preferably 0.01 MPa or more and 0.75 MPa or less, and still more preferably 0.1 MPa or more and 0.5 MPa or less.

The 25% compression load P2 measured under the condition of -30°C is preferably 0.005 MPa or more and 1 MPa or less, more preferably 0.01 MPa or more and 0.75 MPa or less, and still more preferably 0.1 MPa or more and 0.5 MPa or less.

In addition to the above, the physical properties of the polyurethane foam can be appropriately set according to the application and the like. The polyurethane foam preferably has the following physical properties.

The glass transition point of the polyurethane foam is preferably -25°C or lower, preferably -30°C or lower, and more preferably -35°C or lower. The lower limit of the glass transition point of the polyurethane foam is not particularly limited, and but usually -100°C or higher.

In the present disclosure, the glass transition point is defined as a temperature at which a peak value of tan δ obtained when viscoelasticity is measured under conditions of a frequency of 1 Hz and a temperature rise rate of 3°C/min is obtained.

The hysteresis loss rate of the polyurethane foam is preferably 15% or less, more preferably 10% or less, and still more preferably 8% or less when measured by the following measurement method. The lower limit of the hysteresis loss rate is not particularly limited, but is usually 1% or more.

The hysteresis loss rate under can be measured as follows based on JIS K 6254: 2010.

[Measurement method]

A test piece has a cylindrical shape with a diameter of 50 mm. The number of test pieces is three. For the measurement, a compression testing machine is used in which a mounted CLD measuring jig comes into contact with a test piece, and at the same time, a load cell senses a repulsive force from the test piece compressed, and the repulsive force is continuously recorded.

The test piece is compressed at a rate of 1.0 mm/min until the test piece reaches a strain of 50%, and then the jig is returned at the same rate of 1.0 mm/min until the test piece returns to a strain of 0%. A relationship between the compressive force and the deflection (compressive force-deformation curve) is recorded. In the recorded compressive force-deformation curve, the hysteresis loss rate is obtained by the same calculation method as JIS K 6400-2.

An apparent density (JIS K 7222) of the polyurethane foam is preferably 100 kg/m$^3$ to 900 kg/m$^3$, more preferably 200 kg/m$^3$ to 800 kg/m$^3$, and still more preferably 300 kg/m$^3$ to 700 kg/m$^3$. When the apparent density is within the above range, suitable cushioning properties can be secured when the polyurethane foam is used as a cushioning material 10 described later.

An average cell diameter of the polyurethane foam is preferably 50 um to 300 μm, more preferably 50 um to 200 μm, and still more preferably 50 um to 100 um. When the cell diameter is within the above range, suitable cushioning properties can be secured, and it is also preferable from the viewpoint of heat insulating property.

The average cell diameter of the polyurethane foam can be calculated by dividing, by the number of cells, cumulative total of cell diameters of cells in contact with a straight line of 25 mm when a section of the polyurethane foam is observed with a scanning electron microscope (SEM) at a magnification of 200 times.

4. Method of producing polyurethane foam

The polyurethane foam can be produced by a general method of producing a polyurethane foam used when a mechanical froth method is employed. For example, after the composition is charged into a mixing head, the composition is stirred and mixed so as to be homogeneous while being mixed with an inert gas. Subsequently, the composition mixed in the mixing head is heated and cured on a release paper or the like or in a predetermined molding die, whereby a polyurethane foam can be obtained. In order to form a desired density of foam, an amount of inert gas stirred into the composition is controlled with a gas flow meter. Increasing the amount of inert gas forming a cell decreases the density, and decreasing the amount of inert gas increases the density. As the inert gas, a gas that is a gas at ambient conditions and is substantially inert or does not react at all to any component of a liquid phase can be used, if necessary. Examples thereof include nitrogen, carbon dioxide, and dry air which is dry and usually a gas.

5. Cushioning material 10

The polyurethane foam is suitable as a cushioning material because it has moderate flexibility and a low hysteresis loss rate. The polyurethane foam is particularly suitable as a cushioning material used for an in-vehicle component, for example, a cushioning material for a battery such as a lithium ion battery because the cushioning properties are not easily impaired at a low temperature. In addition, since the polyurethane foam has a small change in characteristics such as hardness in a wide temperature range from a low temperature to a high temperature and achieves high responsiveness, the polyurethane foam is also suitable as a cushioning material used for electronic devices and sensor sections. The high responsiveness can be realized, for example, by reducing the hysteresis loss rate.

Fig. 1 illustrates the cushioning material 10 including a polyurethane foam. The cushioning material 10 is disposed between a plurality of cells C, C stacked on each other. Although the two cells C, C and one cushioning material 10 are illustrated in Fig. 1, the number of cells and the number of cushioning materials are arbitrary. Each of the cells C may expand and contract when a battery is charged and discharged. The cushioning material 10 of the present embodiment has high responsiveness, and can be compressed as the cell C expands and can be restored as the cell C contracts. The cushioning material 10 follows the expansion and contraction of the cells C, C, thereby fixing the cells C, C so that the cells C, C are prevented from moving in a housing of the battery. The battery, particularly a battery mounted on a vehicle (for example, a lithium ion battery) is assumed to be used in a wide temperature range (for example, -30°C to 60°C), and the cushioning material 10 is also required to have characteristics such as hardness that do not change easily in a wide temperature range. In the polyurethane foam of the present disclosure, the 25% compression load does not change much under the conditions of 25°C and -30°C; therefore, for example, even under a low temperature environment, the polyurethane foam can follow the expansion and contraction of the cells C, C so that the cells C, C can be fixed.

The thickness of the cushioning material 10 is not particularly limited. The thickness of the cushioning material 10 is preferably 0.5 mm to 6 mm, more preferably 1 mm to 5 mm, and still more preferably 2 mm to 3 mm from the viewpoint of followability to the cells C, C. From the viewpoint of controlling a surface pressure of the block-shaped cells C, C, the size of the cushioning material 10 is preferably substantially the same as or slightly smaller than opposing surfaces of the adjacent cells C, C.

From the viewpoint of moldability, the cushioning material 10 can be obtained by punching a polyurethane foam molded into a sheet shape in the thickness direction.

The polyurethane foam is not limited to a cushioning material, and can be used in various applications. Examples of such a member include electronic equipment components such as mobile phones, cameras, and televisions, in-vehicle components such as batteries, vehicle lighting devices, and vehicle display devices, and sealing materials for water stop and dust prevention in toner cartridges and the like.

6. Operation and advantageous effects of present embodiment

In recent years, polyurethane foams have been required to have various performances, and their requirements have also become severe. For example, the cushioning material 10 for a battery is required to be capable of following expansion and contraction of a cell in a wide temperature range from a low temperature to a high temperature. In particular, a polyurethane foam capable of maintaining the cushioning properties (followability) at a low temperature is required.

In the polyurethane foam of the present embodiment, the cushioning properties are not easily impaired at a low temperature. Unlike the present embodiment, a cushioning material using a conventional polyurethane foam has a high glass transition point, and thus the cushioning properties in a low temperature environment cannot be secured. In contrast, the cushioning material 10 using the polyurethane foam of the present embodiment has a small increase in hardness even in a low temperature environment. Therefore, the cushioning material 10 can secure the cushioning properties in a low temperature environment.

The polyurethane foam of the present embodiment has a low hysteresis loss rate. Therefore, it is possible to sufficiently follow displacement of surrounding members such as the cell C and to exhibit suitable cushioning properties.

EXAMPLES

Next, the above embodiment will be described more specifically with reference to Examples and Comparative Examples.

1. Production of polyurethane foam

First, raw material components of the composition used in the polyurethane foam of each Example and each Comparative Example are shown below.

Polymer polyol 1: polymer polyol having a weight average molecular weight of 3000, three functional groups, a hydroxyl value of 42 mg KOH/g, a polymer content of 22.9% by mass, an EO content of 0%, and a PO content of 100%
Polymer polyol 2: polymer polyol having a weight average molecular weight of 3000, two functional groups, a hydroxyl value of 28.6 mg KOH/g, a polymer content of 20.0% by mass, an EO content of 10%, and a PO content of 90%
Polyether polyol 1: polyether polyol having a weight average molecular weight of 3000, two functional groups, a hydroxyl value of 37.4 mg KOH/g, an EO content of 10%, and a PO content of 90%
Polyether polyol 2: polyether polyol having a weight average molecular weight of 3000, three functional groups, a hydroxyl value of 56.1 mg KOH/g, an EO content of 0%, and a PO content of 100%
Polyether polyol 3: polyether polyol having a weight average molecular weight of 3000, three functional groups, a hydroxyl value of 56.1 mg KOH/g, an EO content of 0%, and a PO content of 100%
Polyether polyol 4: polyether polyol having a weight average molecular weight of 3000, three functional groups, a hydroxyl value of 56.1 mg KOH/g, an EO content of 7%, and a PO content of 93%
Polyether polyol 5: polyether polyol having a weight average molecular weight of 3400, three functional groups, a hydroxyl value of 50.3 mg KOH/g, an EO content of 80%, and a PO content of 20%
Polyether polyol 6: polyether polyol having a weight average molecular weight of 2000, two functional groups, a hydroxyl value of 56.1 mg KOH/g, an EO content of 0%, and a PO content of 100%
Polyether polyol 7: polyether polyol having a weight average molecular weight of 400, two functional groups, a hydroxyl value of 280.5 mg KOH/g, an EO content of 0%, and a PO content of 100%
Polyester polyol: polycaprolactone diol having a weight average molecular weight of 529, two functional groups, and a hydroxyl value of 212 mg KOH/g. The EO content and the PO content are 0%.
Another polyol 1: dipropylene glycol having a molecular weight of 134, two functional groups, and a hydroxyl value of 837 mg KOH/g. The EO content and the PO content are 0%.
Another polyol 2: 2-methyl-1,3-propanediol having a molecular weight of 90, two functional groups, and a hydroxyl value of 1245 mg KOH/g. The EO content and the PO content are 0%.
Aluminum hydroxide (manufactured by Sumitomo Chemical Co., Ltd., CW-325 LV)
Foam stabilizer: silicone foam stabilizer (manufactured by Dow Corning Toray Co., Ltd., SZ-1952)
Catalyst 1: iron catalyst (manufactured by Nihon Kagaku Sangyo Co., Ltd. FIN-P1)
Catalyst 2: nickel catalyst (LC-5615 manufactured by Momentive Performance Materials Inc.)
Antioxidant: hindered phenol-based antioxidant (manufactured by BASF Japan Ltd., IRGANOX 1135)
Moisture absorbent: zeolite (manufactured by Union Showa KK, Molecular sieve 3APOWDER)
Isocyanate 1: polymeric MDI having a molecular weight of 320, 2.4 functional groups, and NCO% of 31.5%
Isocyanate 2: carbodiimide-modified MDI having a molecular weight of 292, two functional groups, and NCO% of 30.88%
The numerical values of the components in Tables 1 and 2 represent parts by mass. The column "F" in Tables 1 and 2 indicates the number of hydroxyl groups in the polyols, and the number of isocyanate groups in the polyisocyanates. The column of "Mw" in Tables 1 and 2 indicates the weight average molecular weight.

The components were prepared in blending ratios shown in Tables 1 and 2 below to obtain compositions of Examples and Comparative Examples. Next, the composition was charged into a mixing head, and mixed by stirring so as to be homogeneous while an inert gas (nitrogen) was mixed in a range of 69 to 77% by volume. Thereafter, the mixed composition was supplied onto a continuously supplied film having a predetermined thickness, and was heated and cured at 120 to 200°C to obtain a sheet-shaped polyurethane foam.

[Table 1]

| | | F | Mw | Comparative Example 1 | Comparative Example 2 | Comparative Example 3 | Comparative Example 4 | Example 1 | Example 2 | Example 3 | Example 4 | Example 5 |
|---|---|---|---|---|---|---|---|---|---|---|---|---|
| Blending amount (part(s) by mass) | Polymer polyol 1 | 3 | 3000 | 54.8 | 9.8 | 11.7 | 2.8 | 6.0 | 5.2 | 5.2 | 5.2 | 5.2 |
| | Polymer polyol 2 | 2 | 3000 | 21.2 | 16.7 | 0 | 27.0 | 0 | 36.5 | 36.5 | 36.5 | 36.5 |
| | Polyether polyol 1 | 2 | 3000 | 0 | 0 | 0 | 0 | 26.8 | 19.9 | 19.9 | 19.9 | 19.9 |
| | Polyether polyol 2 | 3 | 3000 | 0 | 0 | 0 | 0 | 0 | 26.5 | 0 | 0 | 0 |
| | Polyether polyol 3 | 3 | 3000 | 0 | 0 | 0 | 0 | 0 | 0 | 26.5 | 0 | 26.5 |
| | Polyether polyol 4 | 3 | 3000 | 0 | 0 | 0 | 0 | 0 | 0 | 0 | 26.5 | 0 |
| | Polyether polyol 5 | 3 | 3400 | 0 | 0 | 0 | 0 | 33.6 | 0 | 0 | 0 | 0 |
| | Polyether polyol 6 | 2 | 2000 | 0 | 42.6 | 22.0 | 49.7 | 19.9 | 0 | 0 | 0 | 0 |
| | Polyether polyol 7 | 2 | 400 | 0 | 3.7 | 52.1 | 3.9 | 0 | 0 | 0 | 0 | 0 |
| | Polyester polyol | 2 | 529 | 13.9 | 14.1 | 14.2 | 15.2 | 13.8 | 11.9 | 11.9 | 11.9 | 11.9 |
| | Another polyol 1 | 2 | 134 | 10.1 | 11.9 | 0 | 0 | 0 | 0 | 0 | 0 | 0 |
| | Another polyol 2 | 2 | 90 | 0.0 | 1.3 | 0 | 1.4 | 0 | 0 | 0 | 0 | 0 |
| | Total amount of polyols | | | 100 | 100 | 100 | 100 | 100 | 100 | 100 | 100 | 100 |
| | Aluminum hydroxide | – | – | 26.8 | 20.1 | 20.1 | 20.1 | 20.3 | 10.8 | 10.8 | 10.8 | 10.8 |
| | Foam stabilizer | – | – | 4.0 | 2.7 | 9.9 | 2.7 | 4.2 | 4.2 | 4.2 | 4.2 | 4.2 |
| | Catalyst 1 | – | – | 0 | 6.0 | 10.5 | 6.0 | 4.3 | 4.3 | 4.3 | 4.3 | 4.3 |
| | Catalyst 2 | – | – | 0.4 | 0 | 0 | 0 | 0 | 0 | 0 | 0 | 0 |
| | Antioxidant | – | – | 0 | 0.1 | 0.1 | 0.1 | 0.2 | 0.1 | 0.1 | 0.1 | 0.1 |
| | Moisture absorbent | – | – | 0 | 2.0 | 2.0 | 2.0 | 2.5 | 2.0 | 2.0 | 2.0 | 2.0 |
| | Isocyanate 1 | 2.4 | 320 | 0 | 48.3 | 44.0 | 25.1 | 17.8 | 16.4 | 16.4 | 16.4 | 16.4 |
| | Isocyanate 2 | 2 | 292 | 36.2 | 0 | 0 | 0 | 0 | 0 | 0 | 0 | 0 |

2. Observation of polyurethane foam

The cross sections of the sheets of Examples and Comparative Examples were observed using SEM. The average cell diameter of the polyurethane foams of Examples was 50 um or more and 300 um or less.

3. Evaluation

Next, the obtained polyurethane foams of Examples and Comparative Examples were evaluated as follows.

[Weight average molecular weight per hydroxyl group in polyol: A]

In the present example, ten types of polyols are used, and "n = 12" in the above formula (a) including two types used only in Comparative Example. A was calculated based on the above formula (a). The results are shown in the column of "Average molecular weight per hydroxyl group in polyol: A" in Table 2.

[Weight average molecular weight of polyols per isocyanate molecule: A $\times$ B]

In the present example, two types of polyisocyanates are used, and "m = 2" in the formula (b). B was calculated based on the above formula (b). In Comparative Example 1, B is 2. In Comparative Examples 2 to 4 and Examples, B is 2.4. A value of A $\times$ B was calculated by multiplying A and B. The results are shown in the column of "Average molecular weight per isocyanate molecule" in Table 2.

[Glass transition point]

The glass transition point (°C) was measured by the method described in the embodiment. The measurement results are shown in the column of "Glass transition point" in Table 2.

[Density]

The apparent density ($kg/m^3$) was measured according to JIS K 7222. The measurement results are shown in the column of "Density" in Table 2.

[Amount of inert gas mixed in composition]

Assuming that the specific gravity of the composition was 1, an amount (% by volume) of the inert gas when a total of the volume of the composition and the volume of the mixed inert gas was 100% by volume was calculated. For example, in Example 5, an amount of the inert gas mixed in the composition of 35% by volume means that 35 mL of the inert gas is mixed in 65 g of the composition prepared at the blending ratio shown in Table 1. The calculation results are shown in the column of "Amount of inert gas mixed in composition" in Table 2.

[25% compression load at 25°C: P1]

The 25% compression load (MPa) at 25°C was measured by the method described in the embodiment. The measurement results are shown in the column of "25% compression load at 25°C" in Table 2.

[25% compression load at -30°C: P2]

The 25% compression load (MPa) at -30°C was measured by the method described in the embodiment. The measurement results are shown in the column of "25% compression load at -30°C" in Table 2.

[Rate of increase in hardness: $P2/P1 \times 100$]

Based on the 25% compression load P1 at 25°C and the 25% compression load P2 at -30°C, the rate of increase in hardness $P2/P1 \times 100$ (%) was calculated. The results are shown in the column of "Rate of increase in hardness" in Table 2, and the measurement results were evaluated according to the following criteria.

"A":

$$P2/P1 \times 100 \leq 180$$

"B":

$$180 < P2/P1 \times 100 \leq 250$$

"C":

$$250 < P2/P1 \times 100$$

[Hysteresis loss rate]

The hysteresis loss rate (%) was measured by the method described in the embodiment. The measurement results are shown in the column of "Hysteresis loss rate" in Table 2, and the measurement results were evaluated according to the following criteria.

"A": hysteresis loss rate was 15% or less
"B": hysteresis loss rate was more than 15%

[Overall evaluation]

"A": The rate of increase in hardness was evaluated as A, and the hysteresis loss rate was evaluated as A.
"B": The rate of increase in hardness was evaluated as B or C, or the hysteresis loss rate was evaluated as B.

[Table 2]

| | Comparative Example 1 | Comparative Example 2 | Comparative Example 3 | Comparative Example 4 | Example 1 | Example 2 | Example 3 | Example 4 | Example 5 |
|---|---|---|---|---|---|---|---|---|---|
| Average molecular weight per hydroxyl group in polyol: A | 910 | 827 | 479 | 978 | 1077 | 1194 | 1194 | 1194 | 1194 |
| Average molecular weight per isocyanate molecule: A × B | 1820 | 1986 | 1149 | 2348 | 2586 | 2866 | 2866 | 2866 | 2866 |
| Glass transition point [°C] | -9 | 2 | 6 | -24 | -35 | -40 | -40 | -40 | -40 |
| Density [kg/m³] | 480 | 480 | 320 | 400 | 320 | 500 | 500 | 500 | 650 |
| Amount of inert gas mixed in composition [% by volume] | 52 | 52 | 68 | 60 | 68 | 50 | 50 | 50 | 35 |
| 25% compression load at 25°C: P1 [MPa] | 0.295 | 0.289 | 0.015 | 0.048 | 0.009 | 0.157 | 0.160 | 0.159 | 0.335 |
| 25% compression load at -30°C: P2 [MPa] | 1.52 | 1.50 | 0.079 | 0.091 | 0.009 | 0.168 | 0.168 | 0.173 | 0.362 |
| Rate of increase in hardness: P2/P1 × 100 [%] | 515 | 519 | 527 | 190 | 100 | 107 | 109 | 109 | 108 |
| | C | C | C | B | A | A | A | A | A |
| Hysteresis loss rate [%] | 24 | 28 | 11 | 18 | 7 | 5 | 5 | 5 | 5 |
| | B | B | A | B | A | A | A | A | A |
| Overall evaluation | B | B | B | B | A | A | A | A | A |

EP 4 342 923 A1

12

4. Results

In Examples 1 to 4, the evaluation of the rate of increase in hardness is A, and P2/P1 $\times$ 100 $\leq$ 180 is satisfied. In Comparative Examples 1 to 4, the evaluation of the rate of increase in hardness is B or C, and P2/P1 $\times$ 100 $\leq$ 180 is not satisfied. Examples 1 to 4 received a higher overall evaluation than Comparative Examples 1 to 4. In Examples 1 to 4, the cushioning properties were not easily impaired at a low temperature.

In Examples 1 to 4, the hysteresis loss rate was evaluated as A, and the cushioning properties (followability) were good as compared with Comparative Examples 1, 2, and 4.

The following invention can also be grasped from the above Examples and Comparative Examples. The above description is appropriately incorporated for the description of specific matters of the following invention.

· A polyurethane foam obtained from a composition containing a polyol and a polyisocyanate, the polyurethane foam satisfying the following condition.
For A obtained by the above formula (a) and B obtained by the above formula (b), 2400 $\leq$ A $\times$ B is satisfied.

5. Effects of Examples

According to the above Examples, it is possible to provide a polyurethane foam in which the cushioning properties are not easily impaired at a low temperature.

The present disclosure is not limited to the embodiment described in detail above, and can be modified or changed in various manners within the scope of the claims of the present disclosure.

REFERENCE SIGNS LIST

10: cushioning material
C: cell

**Claims**

**1.** A polyurethane foam obtained from a composition containing a polyol and a polyisocyanate,

when a 25% compression load measured under a condition of 25°C is P1 (MPa) and a 25% compression load measured under a condition of -30°C is P2 (MPa),

$$(P2/P1) \times 100 \leq 180$$

being satisfied.

**2.** The polyurethane foam according to claim 1, wherein a glass transition point is -30°C or lower.

**3.** The polyurethane foam according to claim 1 or 2, wherein a hysteresis loss rate is 15% or less.

**4.** The polyurethane foam according to any one of claims 1 to 3, wherein for A obtained by the following formula (a), 1000 $\leq$ A is satisfied:
[Math. 1]

$$A = \sum_{i=1}^{n} \left( \frac{m1i}{f1i} \times \frac{x1i}{y1} \right) \quad \cdots (a)$$

m1i: a weight average molecular weight of an i-th type of polyol (i is a natural number of 1 $\leq$ i $\leq$ n) among n types of polyols (n is a natural number of 1 or more) contained in the polyol,

f1i: the number of hydroxyl groups per molecule of the i-th type of polyol (i is a natural number of $1 \leq i \leq n$) among n types of polyols (n is a natural number of 1 or more) contained in the polyol,

x1i: a blending amount (parts by mass) of the i-th type of polyol (i is a natural number of $1 \leq i \leq n$) among n types of polyols (n is a natural number of 1 or more) contained in the polyol, and

y1: a blending amount (parts by mass) of all n types of polyols (n is a natural number of 1 or more) contained in the polyol.

5. A cushioning material comprising the polyurethane foam according to any one of claims 1 to 4.

# Fig. 1

## INTERNATIONAL SEARCH REPORT

| International application No. |
|---|
| **PCT/JP2022/015061** |

**A.    CLASSIFICATION OF SUBJECT MATTER**

*C08G 18/00*(2006.01)i; *A47C 27/15*(2006.01)i; *C08G 101/00*(2006.01)n
FI:    C08G18/00 F; A47C27/15 A; C08G101:00

According to International Patent Classification (IPC) or to both national classification and IPC

**B.    FIELDS SEARCHED**

Minimum documentation searched (classification system followed by classification symbols)

    C08G18/00; A47C27/15; C08G101/00

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2008-195962 A (ASAHI GLASS CO LTD) 28 August 2008 (2008-08-28) paragraphs [0029], [0048], examples 1-5 (paragraphs [0051]-[0060], [0066]-[0068]) | 1, 4-5 |
| Y | | 2-3 |
| X | JP 2004-300352 A (SANYO CHEMICAL IND LTD) 28 October 2004 (2004-10-28) paragraphs [0014], [0039], [0045], examples 1-3 (paragraphs [0041]-[0044]) | 1, 4-5 |
| Y | | 2-3 |
| X | JP 9-176274 A (NIPPON POLYURETHANE IND CO LTD) 08 July 1997 (1997-07-08) paragraphs [0001], [0006], [0012], examples 1-6 (paragraphs [0014]-[0018], [0020]) | 1, 4-5 |
| Y | | 2-3 |
| Y | JP 11-8897 A (INOAC CORP) 12 January 1999 (1999-01-12) claims, paragraph [0022] | 2 |
| Y | JP 2010-24319 A (NEGAMI KOGYO KK) 04 February 2010 (2010-02-04) claims, paragraph [0003] | 2 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2022/015061** |

### C. DOCUMENTS CONSIDERED TO BE RELEVANT

| Category* | Citation of document, with indication, where appropriate, of the relevant passages | Relevant to claim No. |
| --- | --- | --- |
| Y | WO 2018/235515 A1 (BRIDGESTONE CORP) 27 December 2018 (2018-12-27) claims, paragraph [0017] | 3 |
| A | JP 2010-202762 A (MITSUI CHEMICALS POLYURETHANES INC) 16 September 2010 (2010-09-16) | 1-5 |
| A | JP 2006-2145 A (MITSUI TAKEDA CHEMICALS INC) 05 January 2006 (2006-01-05) | 1-5 |

Form PCT/ISA/210 (second sheet) (January 2015)

**INTERNATIONAL SEARCH REPORT**
Information on patent family members

International application No.

**PCT/JP2022/015061**

| Patent document cited in search report | | | Publication date (day/month/year) | Patent family member(s) | | | Publication date (day/month/year) |
|---|---|---|---|---|---|---|---|
| JP | 2008-195962 | A | 28 August 2008 | US | 2003/0130367 | A1 | |
| | | | | paragraphs [0030], [0049], examples 1-5 (paragraphs [0052]-[0066], [0073]-[0074]) | | | |
| | | | | EP | 1316571 | A1 | |
| | | | | TW | 200300421 | A | |
| | | | | KR | 10-2003-0044843 | A | |
| | | | | CN | 1421472 | A | |
| JP | 2004-300352 | A | 28 October 2004 | (Family: none) | | | |
| JP | 9-176274 | A | 08 July 1997 | (Family: none) | | | |
| JP | 11-8897 | A | 12 January 1999 | (Family: none) | | | |
| JP | 2010-24319 | A | 04 February 2010 | (Family: none) | | | |
| WO | 2018/235515 | A1 | 27 December 2018 | US | 2020/0140642 | A1 | |
| | | | | claims, paragraph [0020] | | | |
| | | | | EP | 3643731 | A1 | |
| | | | | CN | 110741026 | A | |
| JP | 2010-202762 | A | 16 September 2010 | (Family: none) | | | |
| JP | 2006-2145 | A | 05 January 2006 | (Family: none) | | | |

Form PCT/ISA/210 (patent family annex) (January 2015)

**EP 4 342 923 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021085926 A
- JP 2020050841 A

- JP 2020139062 A